# FASCICULE DE BREVET EUROPEEN

(11) **EP 0 837 541 B1**
(45) Date de publication et mention de la délivrance du brevet: **13.04.2005**
(21) Numéro de dépôt: 97117437.0
(22) Date de dépôt: 09.10.1997
(51) Int. Cl.: H02K 5/22, B60H 1/00

(54) **Dispositif de raccordement électrique d'un moteur électrique à un module d'alimentation**
Elektrische Anschlussvorrichtung zwischen einem Elektromotor und einer Stromversorgungseinheit
Electrical connection device between an electric motor and a power supply unit

(30) Priorité: 10.10.1996 FR 9612383
(43) Date de publication de la demande: 22.04.1998
(73) Titulaire: VALEO CLIMATISATION, 78321 La Verrière (FR)
(72) Inventeur: Scalone, Orlando, 95100 Argenteuil (FR)
(74) Mandataire: Gamonal, Didier

(56) Documents cités:
- EP-A- 0 226 864
- EP-A- 0 351 272
- EP-A- 0 542 057
- GB-A- 2 002 182
- US-A- 5 297 929
- "PLUGGABLE FAN ASSEMBLY" IBM TECHNICAL DISCLOSURE BULLETIN, vol. 32, no. 3A, août 1989, page 342/343 XP000049444
- KING J ET AL: "VIBRATOR MOTOR BRACKET USED MULTIFUNCTIONALLY AS NEGATIVE CELL FIXED CONTACT" MOTOROLA TECHNICAL DEVELOPMENTS, vol. 11, 1 octobre 1990, page 105 XP000178644

## Description

L'invention concerne un dispositif de raccordement électrique d'un moteur électrique, plus particulièrement du moteur d'entraînement d'une turbine destinée à envoyer de l'air dans l'habitacle d'un véhicule, à un module d'alimentation, le moteur et le module étant des composants propres à être montés indépendamment l'un de l'autre sur un support commun en matière plastique.

Le moteur d'entraînement d'un ventilateur destiné à faire circuler de l'air est généralement alimenté en électricité par une source extérieure. Un tel dispositif est décrit dans la demande de brevet européen 0 837 541.

Dans les appareils de chauffage/ventilation ou de climatisation de l'habitacle des véhicules automobiles, la gestion électrique est assurée par l'intermédiaire d'un module contenant des éléments électriques tels que transistors et résistances, permettant la mise en route et l'arrêt et le cas échéant la variation de vitesse du moteur et par conséquent du ventilateur. Le moteur et le module constituent des composants qui se montent indépendamment l'un de l'autre sur un support commun en matière plastique moulée appartenant au boîtier de l'appareil. Le raccordement électrique du moteur au module est effectué traditionnellement par des fils électriques qui doivent être reliés électriquement aux deux composants, avant ou après leur montage sur le support.

Le but de l'invention est de simplifier l'assemblage en éliminant l'étape de liaison électrique des fils au moteur et au module.

L'invention vise notamment un dispositif du genre défini en introduction, et prévoit qu'il comprend au moins une lame conductrice fixée sur ledit support et deux éléments de contact solidaires du moteur et du module respectivement, chacun desdits éléments de contact étant propre à venir coopérer avec une zone de contact correspondante de la lame de façon à assurer une liaison mécanique et électrique lorsque le composant qui le porte est amené vers le support de façon à assurer une liaison mécanique et électrique lorsque le composant qui le porte est amené vers le support.

Ainsi, le raccordement électrique du moteur et du module s'effectue par la simple mise en place de ces composants sur le support, sans nécessiter d'opérations particulières.

Des caractéristiques optionnelles du dispositif selon l'invention, complémentaires ou alternatives, sont énoncées ci-après:
- La lame est fixée sur le support en étant emprisonnée dans la matière plastique constitutive de celui-ci.
- La lame est emprisonnée par rivetage.
- La lame est emprisonnée par encliquetage.
- La lame est emprisonnée par surmoulage.
- Les éléments de contact et les zones de contact sont sous forme des cosses mâles et femelles respectivement.
- Les cosses mâles sont de forme plate et chaque cosse femelle comporte deux branches venant s'appuyer élastiquement sur les faces opposées de la cosse mâle correspondante respectivement.
- Le support forme une cuvette logeant au moins en partie lesdits composants et les éléments de contact sont propres à venir coopérer avec les zones de contact par des mouvements de translation des deux composants selon des axes mutuellement parallèles et orientés de l'ouverture vers le fond de la cuvette.
- La lame est fixée sur le fond de la cuvette.
- Il comprend deux lames conductrices fixées sur ledit support, associées chacune à deux éléments de contact de manière à relier le module aux deux polarités du moteur respectivement.

Les caractéristiques et avantages de l'invention seront exposés plus en détail dans la description ci-après, en se référant aux dessins annexés, sur lesquels:
- la figure 1 est une vue schématique en élévation montrant un moteur et un module montés sur un support et équipés d'un dispositif de raccordement selon l'invention;
- la figure 2 est une vue schématique de dessous de l'ensemble de la figure 1;
- la figure 3 est une vue de côté;
- les figures 4 à 6 sont des vues partielles en coupe montrant différents modes de fixation d'une lame conductrice sur le support;
- les figures 7 et 8 sont des vues partielles en coupe selon les lignes VII-VII et VIII-VIII de la figure 1 respectivement; et
- la figure 9 est une vue de détail montrant la coopération d'une zone de contact d'une lame et d'un élément de contact d'un composant.

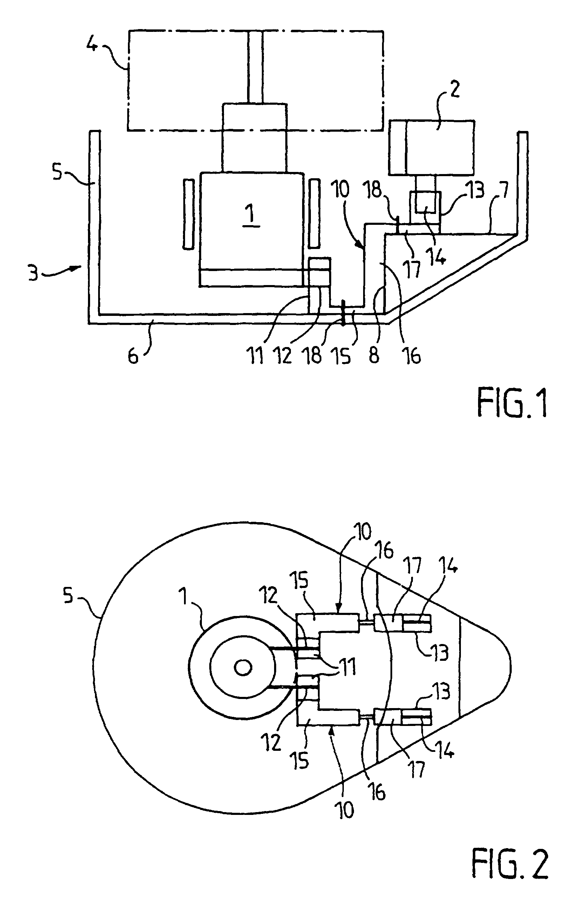

On voit en particulier sur la figure 1 un moteur électrique 1 et un module 2 pour l'alimentation électrique de celui-ci, ces deux composants étant montés sur un support 3 en forme générale de cuvette, en matière plastique moulée, qui fait partie du boîtier d'un appareil de chauffage/ventilation ou de climatisation de l'habitacle d'un véhicule automobile. L'arbre de sortie du moteur 1 porte une turbine 4 destinée à faire circuler de l'air dans l'appareil pour l'envoyer dans l'habitacle du véhicule après un traitement approprié. Le support en cuvette 3 comprend une paroi latérale annulaire 5 s'étendant verticalement vers le haut à partir d'un fond qui présente notamment deux régions planes et horizontales 6 et 7 reliées entre elles par un échelon vertical 8. Le moteur 1 est disposé au-dessus de la région la plus basse 6, et le module 2 au-dessus de la région la plus haute 7.

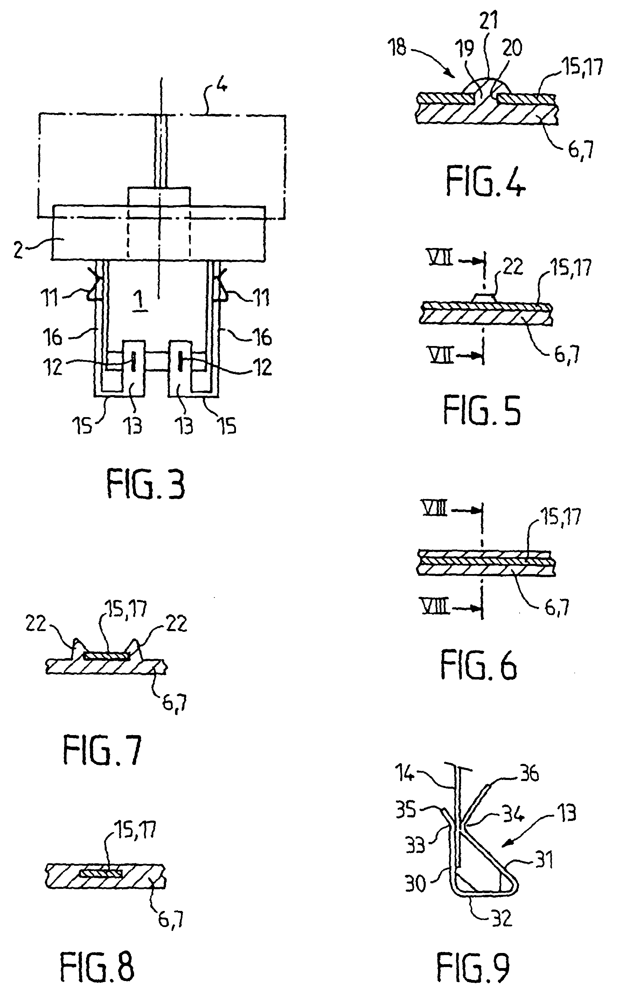

Selon l'invention, le moteur 1 et le module 2 sont raccordés électriquement au moyen de deux lames conductrices 10 formées par découpage et pliage à partir d'une tôle métallique mince. Chaque lame 10 présente une zone de contact terminale 11 coopérant avec un élément de contact 12 du moteur et une zone de contact terminale 13 coopérant avec un élément de contact 14 du module. En allant de la zone 11 vers la zone 13, on trouve successivement une zone plane 15 appliquée contre la région inférieure 6 du fond, une zone 16 s'élevant verticale,ment le long de l'échelon 8, et une zone plane 17 appliquée sur la région supérieure 7 du fond. Les zones 15 et 17 sont fixées au fond par rivetage en des points de fixation 18 indiqués schématiquement sur la figure 1 et représentés en détail à la figure 4. Lors du moulage du support 3 il est prévu en chacun des points de fixation 18 un picot 19 en saillie sur la face supérieure du fond 6, 7, qui s'engage, lors de la mise en place de la lame 10, dans un trou 20 ménagé dans celle-ci. La partie du picot s'étendant au-delà de l'épaisseur de la zone 15, 17 de la lame est alors déformée à chaud à l'aide d'un outil pour former une tête de rivet 21 immobilisant ladite région autour du trou.

En variante, on peut prévoir lors du moulage du support deux pattes élastiques 22 qui viendront encadrer les bords opposés de la région 15, 17 de la lame et immobiliser cette région contre le fond 6, 7 après qu'elle aura été mise en place par déformation élastique des pattes (figures 5 et 7).

Dans la variante illustrée aux figures 6 et 8, la lame 10 est utilisée comme insert lors du moulage du support 3 et les régions 15, 17 sont immobilisées par surmoulage dans l'épaisseur du fond 6, 7 sur une partie au moins de leur longueur.

La figure 9 montre la configuration de la zone de contact 13 d'une lame 10 et de l'élément de contact correspondant 14 du module 2. L'élément de contact 14 est une cosse plate qui s'étend verticalement vers le bas à partir du corps du module 2. La zone de contact 13 présente deux branches 30 et 31 qui s'élèvent à partir d'un fond 32, prolongeant la zone 17 et reposant sur la région de fond 7, de façon à venir s'appuyer élastiquement sur les faces opposées de la cosse 14. Les branches 30 et 31 sont sous forme de bandes qui s'approchent l'une de l'autre à partir du fond 32 jusqu'à des coudes respectifs 33, 34 situés en regard l'un de l'autre, au-delà desquels elles s'écartent de nouveau l'une de l'autre jusqu'à des bords libres respectifs 35, 36. Cette disposition permet une insertion facile de la cosse 14 entre les deux branches, par un mouvement vertical de bas en haut du module, et une bonne pression de contact au niveau des coudes 33, 34.

Les zones de jonction 11 ont la même configuration que les zones 13. Les éléments de contact 12 sont des cosses plates également semblables aux cosses 14, et s'étendent horizontalement à partir du moteur 1. Ces cosses sont disposées selon des plans verticaux, de sorte qu'elles peuvent également être insérées entre les branches des zones de contact 11 par un mouvement vertical de haut en bas du moteur.

Le moteur et le module peuvent par ailleurs être fixés mécaniquement sur le support par tout moyen connu.

## Revendications

1. Dispositif de raccordement électrique d'un moteur électrique (1), plus particulièrement du moteur d'entraînement d'une turbine (4) destinée à envoyer de l'air dans l'habitacle d'un véhicule, à un module d'alimentation (2) permettant la mise en route et l'arrêt dudit moteur, le moteur et le module étant des composants propres à être montés indépendamment l'un de l'autre sur un support commun (3) en matière plastique, **caractérisé en ce qu'**il comprend au moins une lame conductrice (10) fixée sur ledit support et deux éléments de contact (12, 14) solidaires du moteur et du module respectivement, chacun desdits éléments de contact étant propre à venir coopérer avec une zone de contact correspondante (11, 13) de la lame de façon à assurer une liaison mécanique et électrique lorsque le composant qui le porte est amené vers le support.

2. Dispositif selon la revendication 1, **caractérisé en ce que** la lame est fixée sur le support en étant emprisonnée dans la matière plastique constitutive de celui-ci.

3. Dispositif selon la revendication 2, **caractérisé en ce que** la lame est emprisonnée par rivetage.

4. Dispositif selon la revendication 2, **caractérisé en ce que** la lame est emprisonnée par encliquetage.

5. Dispositif selon la revendication 2, **caractérisé en ce que** la lame est emprisonnée par surmoulage.

6. Dispositif selon l'une des revendications précédentes, **caractérisé en ce que** les éléments de contact et les zones de contact sont sous forme des cosses mâles et femelles respectivement.

7. Dispositif selon la revendication 6, **caractérisé en ce que** les cosses mâles (14) sont de forme plate et que chaque cosse femelle (13) comporte deux branches (30, 31) venant s'appuyer élastiquement sur les faces opposées de la cosse mâle correspondante respectivement.

8. Dispositif selon l'une des revendications précédentes, **caractérisé en ce que** le support forme une cuvette logeant au moins en partie lesdits composants et que les éléments de contact sont propres à venir coopérer avec les zones de contact par des mouvements de translation des deux composants selon des axes mutuellement parallèles et orientés de l'ouverture vers le fond (6, 7) de la cuvette.

9. Dispositif selon la revendication 8, **caractérisé en ce que** la lame est fixée sur le fond (6, 7) de la cuvette.

10. Dispositif selon l'une des revendications précédentes, **caractérisé en ce qu'**il comprend deux lames conductrices (10) fixées sur ledit support, associées chacune à deux éléments de contact (12, 14) de manière à relier le module aux deux polarités du moteur respectivement.

## Claims

1. Device for electrical connection of an electric motor (1), and more particularly of the drive motor of a turbine (4) designed to send air into the interior of a vehicle, to a supply module (2) enabling the starting and stopping of the said motor, the motor and the module being components designed to be mounted independently from each other on a common plastic support (3), **characterised by** the fact that it comprises at least one conducting strip (10) attached on the said support and two contact elements (12, 14) attached to the motor and the module respectively, each of the said contact elements being designed to cooperate with a corresponding contact area (11, 13) of the strip to provide a mechanical and electrical link when the component which carries it is moved towards the support.

2. Device according to claim 1, **characterised by** the fact that the strip is attached on the support by being trapped in the plastic material constituting this support.

3. Device according to claim 2, **characterised by** the fact that the strip is trapped by riveting.

4. Device according to claim 2, **characterised by** the fact that the strip is trapped by a ratchet mechanism.

5. Device according to claim 2, **characterised by** the fact that the strip is trapped by over-moulding.

6. Device according to one of the above claims, **characterised by** the fact that the contact elements and the contact areas are in the form of male and female terminal lugs respectively.

7. Device according to claim 6, **characterised by** the fact that the male terminal lugs (14) are flat in shape and each female terminal lug (13) comprises two branches (30, 31) which press elastically on the opposing faces of the corresponding male terminal lug respectively.

8. Device according to one of the above claims, **characterised by** the fact that the support forms a bowl shape at least partly housing the said components and the contact elements are designed to cooperate with the contact areas by translation movements of the two components along mutually parallel axes oriented from the opening towards the bottom (6, 7) of the bowl.

9. Device according to claim 8, **characterised by** the fact that the strip is attached on the bottom (6, 7) of the bowl.

10. Device according to one of the above claims, **characterised by** the fact that it comprises two conducting strips (10) attached on the said support, each associated with two contact elements (12, 14) in such a way as to link the module to the two poles of the motor respectively.

## Patentansprüche

1. Elektrische Anschlussvorrichtung eines Elektromotors (1), insbesondere des Antriebsmotors einer Turbine (4) für die Luftzufuhr in den Innenraum eines Fahrzeugs, mit einem Versorgungsmodul (2), das das Einund Ausschalten des besagten Motors ermöglicht, wobei der Motor und das Modul Komponenten sind, die unabhängig voneinander auf einem gemeinsamen Kunststoffträger (3) montiert werden können, **dadurch gekennzeichnet, dass** sie mindestens eine an dem besagten Träger befestigte leitende Lamelle (10) und zwei jeweils zum Motor und zum Modul gehörende Kontaktelemente (12, 14) umfasst, wobei jedes der besagten Kontaktelemente mit einem entsprechenden Kontaktbereich (11, 13) der Lamelle zusammenwirken kann, um eine mechanische und elektrische Verbindung zu gewährleisten, wenn die ihn tragende Komponente dem Träger zugeführt wird.

2. Vorrichtung nach Anspruch 1, **dadurch gekennzeichnet, dass** die Lamelle auf dem Träger befestigt wird, indem sie in den Kunststoff, aus dem er besteht, eingebettet wird.

3. Vorrichtung nach Anspruch 2, **dadurch gekennzeichnet, dass** die Lamelle durch Nieten eingebettet wird.

4. Vorrichtung nach Anspruch 2, **dadurch gekennzeichnet, dass** die Lamelle durch Einklinken eingebettet wird.

5. Vorrichtung nach Anspruch 2, **dadurch gekennzeichnet, dass** die Lamelle durch Abformen eingebettet wird.

6. Vorrichtung nach einem der vorangehenden Ansprüche, **dadurch gekennzeichnet, dass** die Kontaktelemente und Kontaktbereiche jeweils als Steckund Aufnahmehülsen ausgebildet sind.

7. Vorrichtung nach Anspruch 6, **dadurch gekennzeichnet, dass** die Steckhülsen (14) eine flache Form haben und jede Aufnahmehülse (13) zwei Schenkel (30, 31) umfasst, die sich jeweils elastisch an den gegenüberliegenden Seiten der entsprechenden Steckhülse abstützen.

8. Vorrichtung nach einem der vorangehenden Ansprüche, **dadurch gekennzeichnet, dass** Träger eine Schale bildet, in der zumindest ein Teil der besagten Komponenten gelagert ist, und dass die Kontaktelemente mit den Kontaktbereichen durch Translationsbewegungen der beiden Komponenten entsprechend parallel zueinander verlaufenden und von der Öffnung zum Schalenboden (6, 7) gerichteten Achsen zusammenwirken können.

9. Vorrichtung nach Anspruch 8, **dadurch gekennzeichnet, dass** die Lamelle am Schalenboden (6, 7) befestigt ist.

10. Vorrichtung nach einem der vorangehenden Ansprüche, **dadurch gekennzeichnet, dass** sie zwei leitende Lamellen (10 umfasst, die an dem besagten Träger befestigt und jeweils zwei Kontaktelementen (12, 14) zugeordnet sind, um das Modul jeweils mit den beiden Polaritäten des Motors zu verbinden.
